# EUROPEAN PATENT SPECIFICATION

(11) **EP 2 367 880 B1**
(45) Date of publication and mention of the grant of the patent: **07.08.2013**
(21) Application number: 09832898.2
(22) Date of filing: 18.11.2009
(51) Int. Cl.: C08L 23/06, C08L 23/04, C08L 23/02, C08J 5/18

(54) **Method of producing a microporous film**
Verfahren zur Herstellung eines mikroporösen Polyolefinfilms
Procédé de production d'un film de polyoléfine microporeux

(30) Priority: 18.12.2008 CN 200810241635
(43) Date of publication of application: 28.09.2011
(73) Proprietor: BYD Company Limited, Shenzhen 518118 (CN)
(72) Inventor: LUO, Mingjun, Guangdong 518118 (CN); YOU, Zhen, Guangdong 518118 (CN); LIU, Huiquan, Guangdong 518118 (CN)
(74) Representative: Gulde Hengelhaupt Ziebig & Schneider
(86) International application number: PCT/CN2009/075011
(87) International publication number: WO 2010/069216

(56) References cited:
- EP-A1- 1 153 968
- WO-A1-2007/117042
- CN-A- 1 294 607
- CN-A- 101 041 722

## Description

The present invention relates to a method of producing microporous films, and more particularly to a method of producing microporous polyolefin films.

### BACKGROUND

Microporous polyolefin films are thin-film-like material with micropores. They are widely used in the production of non-aqueous electrolyte battery separators, capacitor diaphragms, separation membranes, and water treatment films. The mechanical strength of existing microporous polyolefin films is poor, especially at high temperatures and the film breaking temperature is low, which can easily cause potential safety problems. Exemplary microporous polyolefin films and methods of producing the same are disclosed in CN 1294607 A, CN 101041722 A, EP 1 153 968 A1 and WO 2007/117042 A1.

The methods of producing microporous polyolefin films include both dry methods and wet methods. At present, the wet methods of producing microporous polyolefin films could only operate on low molecular weight polyolefin materials, or on low molecular weight polyolefin materials with a few ultra-high-molecular-weight polyolefin added in. Because of the poor melt flowability and the particle slippery surface of the ultra-high-molecular-weight polyolefin, if too much ultra-high-molecular-weight polyolefin is added, it's likely to cause poor plasticizing by using the existing methods. Under such circumstances, only a small amount of ultra-high-molecular-weight polyolefin can be plasticized, and thus the uniform microporous films can not be made at the end.

One parameter of the microporous polyolefin films is their mechanical strength, especially at high temperatures. The mechanical strength of the microporous polyolefin film directly impacts the safety and service life of electrical devices using the films. At present the mechanical strength property of microporous polyolefin films is qualified at room temperature. However, a main battery safety concern is its performance under abnormal conditions, such as at high temperature. Thus it is necessary to enhance the mechanical strength of microporous polyolefin films at high-temperature. Film breaking temperature is an important parameter related to the safety of the films at high temperature, where the films with the higher film breaking temperature are safer.

### SUMMARY

In viewing thereof, the present invention is directed to solve at least one of the problems existing in the prior art. Accordingly, the present invention needs to provide a method of producing a microporous polyolefin film with good mechanical strength and stable property at high temperature.

The method of producing a microporous film comprises the steps of: preparing a first mixture by melting and mixing ultra-high-molecular-weight polyolefin with a solvent, wherein a weight-average molecular weight of the ultra-high-molecular-weight polyolefin is 1×10⁶ to 6×10⁶; preparing a second mixture by melting and mixing a polyolefin resin having a weight-average molecular weight of the less than 5 × 10⁵ with the first mixture; forming the second mixture into a film; removing the solvent from the film to form the microporous film; and annealing the microporous films for setting.

Other variations, embodiments and features of the present invention will become evident from the following detailed description, drawings and claims.

### DETAILED DESCRIPTION

A microporous polyolefin film comprises an ultra-high-molecular-weight polyolefin and a polyolefin resin. And the microporous polyolefin film has film breaking temperature of 150 °C to 156 °C, and puncture strength at 90°C of 428 g to 533 g.

The ultra-high-molecular-weight polyolefin and the polyolefin resin have a weight ratio of 2 : 3 to 4 : 1. In some embodiments, the weight ratio is from 3 : 2 to 3:1.

The ultra-high-molecular-weight polyolefin includes one or more of single polymers or copolymers of the following monomers without limitation: ethylene, propylene, 1-butene, 4-methyl-1-pentene and 1-hexene. The weight-average molecular weight of the ultra-high-molecular-weight polyolefin can be from 1×10⁶ to 6×10⁶. It may be difficult to melt and mix if the weight-average molecular weight is more than 6×10⁶. Whereas the mechanical strength will be too low to use if the weight-average molecular weight is less than 1 × 10⁶. In some embodiments, the weight-average molecular weight of the ultra-high-molecular-weight polyolefin can be from 2 × 10⁶ to 4×10⁶.

The polyolefin resin can be a high-density (0.94 to 0.96kg/cm³) polyolefin resin which includes one or more of single polymers or copolymers of the following monomers without limitation: ethylene, propylene, 1-butene, 4-methyl-1-pentene and 1-hexene. The weight-average molecular weight of the polyolefin resin can be from 1 × 10⁴ to 5×10⁵. In some embodiments, it can be from 5×10⁴ to 3×10⁵.

In some embodiments, the polyolefin resin can further include a low-density (0.91 to 0.93kg/cm³) polyolefin resin which includes one or more of single polymers or copolymers of the following monomers without limitation: ethylene, propylene, 1-butene, 4-methyl-1-pentene and 1-hexene. The low-density polyolefin resin can reduce the closed-cell temperature of polyolefin microporous films. The amount of low-density polyolefin resin can be up to 20 % of the total polyolefin resin by weight.

A method of producing a microporous polyolefin film comprising the steps of:
(1) preparing a first mixture by melting and mixing ultra-high-molecular-weight polyolefin with a solvent, wherein a weight-average molecular weight of the ultra-high-molecular-weight polyolefin is 1×10⁶ to 6× 10⁶;
(2) preparing a second mixture by melting and mixing a polyolefin resin having a weight-average molecular weight of the less than 5×10⁵ with the first mixture;
(3) extruding the second mixture from die and molding into pieces by the cooling roller, drawing the pieces to form films;
(4) eluting the solvent from the films; and
(5) and annealing the microporous films after eluting the solvent for setting.

The solvent can be one or more aliphatic hydrocarbons selected from the group consisting of nonane, decane, undecane, dodecane, decalin and liquid paraffin. In some embodiments, the solvent is liquid paraffin with a kinematical viscosity at 40 °C of 30 cst to 150 cst, which can be easily melted and mixed with the ultra-high-molecular-weight polyolefin, and also can be easily eluted.

In one embodiment, the ultra-high-molecular-weight polyolefin and the solvent have a weight ratio of 1 : 1.9 to 1 : 6.7, which is helpful to mold easily and obtain the microporous films with high porosity and high air permeability.

The melting and mixing technique can be any method known by one skilled in the art.

In one embodiment, the melting and mixing method in Step (1) can be as following: the ultra-high-molecular-weight polyolefin and solvent are mixed within a stirring tank under heating and high pressure for a certain amount of time to allow them to swell fully, and then extruded by using a twin-screw extruder. In another embodiment, the melting and mixing method in Step (1) can be as following: the ultra-high-molecular-weight polyolefin is added to a twin-screw extruder, and the solvent is also added in from a lateral feed-port. Then the ultra-high-molecular-weight polyolefin and the solvent are mixed and directly extruded by the twin-screw extruder. The melting and mixing temperature of the first mixture can be from 230 °C to 240 °C, namely which is 40 °C to 100 °C higher than the melting point of the ultra-high-molecular-weight polyolefin.

In some embodiments, the melting and mixing method in Step (2) can be as following: the first mixture and polyolefin are added into the twin-screw extruded, and then fully mixed and directly extruded by the twin-screw extruder. The melting and mixing temperature may be 40 °C to 100 °C higher than the melting point of the ultra-high-molecular-weight polyolefin.

In the Step (3), the second mixture is extruded from the die of extruder and molded into pieces by a cooling roller. In order to prevent the formation of larger phase regions in the phase of separation process, the polyolefin should be rapidly cooled after extrusion. The temperature of cooling roller can be below 30 °C. The cooling rate can also be sped up using water bath, ice bath, ice salt bath, and the like.

The drawing can be either unidirectional or bidirectional. In one embodiment, the drawing is bidirectional. That is to say, the drawing is along the machine direction (MD) firstly, and then along the transverse direction (TD). The total magnification can be about 10 to 100 times. If the drawing magnification is too small, the microporous films will have low porosity, poor air permeability and low intensity. Whereas, if the drawing magnification is too large, the process will be difficult and the film will be easy to be pierced. The drawing temperature can be 90 °C to 140 °C.

In the Step (4), the eluting process is achieved by using an elution solvent, which can be extraction agents of hydrocarbons, halogenated hydrocarbons, ethers and/or ketones. The hydrocarbons can be selected from pentane, hexane, heptane and decane. The halogenated hydrocarbons can be selected from chloromethane, carbon tetrachloride and trifluoroethane. The ethers can be selected from ether and dioxane. The ketones can be selected from acetone and butanone. The residual volume of the solvent after elution is below 1 wt%.

During this Step (5), in order to prevent the high-temperature contraction, the microporous films need annealing, namely to be heat-treated. The films can be drawn along the transverse direction while heat treatment to ensure the microporous film has good permeability and mechanical strength. The drawing conditions include the preheating temperature of 80 °C to 120 °C, drawing temperature of 100 °C to 130 °C, heat-treatment temperature of 110 °C to 140 °C, heat-treatment time of 10 s to 100 s, and drawing magnification of 1.1 to 1.8 times.

The melting and mixing method of the present disclosure is a step by step melting and mixing. The ultra-high-molecular-weight polyolefin is relatively more refractory, and has a good compatibility with solvent. During the first melting and mixing step, the ultra-high-molecular-weight polyolefin is plasticized fully, and is formed a homogeneous molten liquid. And then during the second melting and mixing step, the polyolefin resin, which is easy to be dissolved, is mixed with the homogeneous molten liquid uniformly.

The method of the present disclosure can effectively solve the difficult problem of processing the ultra-high-molecular-weight polyolefin microporous films, and enhance the mechanical strength of microporous polyolefin films, especially the mechanical strength at high temperature.

### EXAMPLE 1

Take 20 kg of the ultra-high-molecular-weight polyolefin UHMWPE (Ultra High Molecular Weight Polyethylene; weight-average molecular weight 3.0× 10⁶, melting point 133 °C) and 80 kg of liquid paraffin (kinematical viscosity 90 cst at 40 °C) into the stirring tank. At 200 °C, heat and stir for 2 hours. Then take the mixed materials into a twin-screw extruder (diameter 78 mm, L / D = 48, strong mixing type). Under the conditions of 200 °C and 200 r / min, the mixed materials is melted and mixed into a mixture. Extrude the mixture into another twin-screw extruder, and put 5 kg of polyethylene resin (weight-average molecular weight 2.0 × 10⁵, melting point 133 °C) at the same time. Under the condition of 200 °C and 220 r / min, both are melted and mixed into a polyethylene solution.

Extrude the polyethylene solution through a T-type die (die gap degree of 1.2 mm, pieces of 260 mm) at the speed ratio of 3 m/min, and then mold it into pieces with thickness of 1.0 mm by a cooling roller, whose surface temperature is about 15 °C.

Bidirectionally draw the pieces step by step to form films. The drawing ratio is machine direction (MD) × transverse direction (TD) =5×7 times. The MD drawing preheating temperature is 115 °C and the MD drawing temperature is 100 °C. The TD drawing preheating temperature is 125 °C and TD drawing temperature is 110°C.

Elute the obtained films with heptane for 2 min, and then drying at 40 °C in a blast oven.

Heat-treat the films with the preheating temperature of 100 °C, drawing temperature of 125 °C and drawing magnification of 1.5 times. Then heat the films to relax back to the drawing magnification of 1.3 times with the stereotype temperature of 125 °C for 20 seconds to obtain a polyolefin microporous film with a thickness of 20 µm.

The polyolefin microporous film produced is labeled A1.

### EXAMPLE 2

The steps are similar to those used in Example 1, only with the difference that the weight of the ultra-high-molecular-weight polyolefin UHMWPE is 12 kg.

The polyolefin microporous film produced is labeled A2.

### EXAMPLE 3

The steps are similar to those used in Example 1, only with the difference that the weight of the ultra-high-molecular-weight polyolefin UHMWPE is 30 kg.

The polyolefin microporous film produced is labeled A3.

### EXAMPLE 4

The steps are similar to those used in Example 1, only with the difference that the weight-average molecular weight of the ultra-high-molecular-weight polyolefin UHMWPE is 5 × 10⁶, and the weight-average molecular weight of the polyethylene resin is 5×10⁴.

The polyolefin microporous film produced is labeled A4.

### EXAMPLE 5

The steps are similar to those used in Example 1, only with the difference that the weight-average molecular weight of the ultra-high-molecular-weight polyolefin UHMWPE is 2 × 10⁶, and the weight-average molecular weight of the polyethylene resin is 3×10⁵.

The polyolefin microporous film produced is labeled A5.

### EXAMPLE 6

The steps are similar to those used in Example 1, only with the difference that the weight of liquid paraffin is 40 kg.

The polyolefin microporous film produced is labeled A6.

### REFERENCE 1

Put 5 kg of the ultra-high-molecular-weight polyolefin UHMWPE (weight-average molecular weight 3.0 × 10⁶, melting point 133 °C), 80 kg of liquid paraffin (kinematical viscosity 90 cst at 40 °C) and 20 kg of polyethylene resin (weight-average molecular weight 2.0 × 10⁵, melting point 133 °C) into the stirring tank heated and stirred at 200 °C for 2 hours. Then take the mixed materials into the twin-screw extruder (diameter 78mm, L / D = 48, strong mixing type), under the conditions of 200 °C and 200 r / min, melted and mixed into a polyethylene solution.

The subsequent steps are similar to those used in Example 1, and the polyolefin microporous film produced is labeled RC1.

### TESTING

### (1) Air Permeability

Test according to standard JIS P8117, and the results are shown in Table 1.

### (2) Puncture Strength

Test the maximum loads of the microporous polyolefin films respectively by using a needle with diameter of 1 mm in speed of 2 mm / s to puncture at room temperature and 90 °C. The results are shown in Table 1.

### (3) Film Breaking Temperature

Prepare a box board with the internal dimensions of a×b = 4cm × 3cm. Fix microporous polyolefin film into the box, where the MD direction of the microporous polyolefin film is along the a-side of the box board. Then maintain 10 min at the temperature of 145 °C to confirm whether the film ruptures. If there is no rupture of film, increase 1 °C each time to maintain the film for another 10 min. Once the film ruptures, record the temperature as its film breaking temperature. The results are shown in Table 1.

### (4) Shrinkage Rate

Record the shrinkage rate of microporous polyolefin films baked for 1 hour at 120 °C according to standard GB12027-1989. The results are shown in Table 1.

**Table 1**

| | Air Permeability (s/100cc) | Puncture Strength (g)/Room Temperature | Puncture Strength (g)/ 90°C | Film Breaking Temperature (°C) | Shrinkage Rate/120 °C | |
|---|---|---|---|---|---|---|
| | | | | | MD% | TD% |
| A1 | 358 | 620 | 529 | 154 | 15.2 | 14.4 |
| A2 | 380 | 602 | 485 | 152 | 15.6 | 14.0 |
| A3 | 335 | 556 | 428 | 151 | 16.0 | 14.8 |
| A4 | 348 | 650 | 533 | 156 | 15.9 | 15.0 |
| A5 | 350 | 622 | 503 | 154 | 15.0 | 14.4 |
| A6 | 520 | 522 | 460 | 156 | 13.8 | 13.4 |
| RC1 | 323 | 480 | 338 | 146 | 16.4 | 15.5 |

From Table 1, it can be concluded that adding the ultra-high-molecular-weight polyolefin can increase the high-temperature puncture strength and film breaking temperature of polyolefin microporous films. The more amount added and the higher molecular weight of the ultra-high-molecular-weight polyolefin, the higher puncture strength and higher film breaking temperature the films have, as well as the better safety the products have.

## Claims

1. A method of producing a microporous film comprising the steps of:
(a) preparing a first mixture by melting and mixing ultra-high-molecular-weight polyolefin with a solvent, wherein the weight-average molecular weight of the ultra-high-molecular-weight polyolefin is 1×10⁶ to 6× 10⁶;
(b) preparing a second mixture by melting and mixing a polyolefin resin having a weight-average molecular weight of the less than 5 × 10⁵ with the first mixture;
(c) forming the second mixture into a film;
(d) removing the solvent from the film to form the microporous film; and
(e) annealing the microporous film.

2. The method of claim 1, wherein the forming step is accomplished by extruding, molding and drawing.

3. The method of claim 1, wherein the solvent is liquid paraffin.

4. The method of claim 2, wherein the drawing comprises a first drawing along the machine direction, and then a second drawing along the transverse direction.

5. The method of claim 1, wherein the melting and mixing temperature of the first mixture is 230 °C to 240 °C.

6. The method of claim 1, wherein the ultra-high-molecular-weight polyolefin and the solvent have a weight ratio of 1 : 1.9 to 1 : 6.7.

## Patentansprüche

1. Verfahren zur Herstellung eines mikroporösen Films, das folgende Schritte aufweist:
(a) Herstellung einer ersten Mischung durch Schmelzen und Mischen von ultrahochmolekularem Polyolefin mit einem Lösungsmittel, wobei das gewichtsmittlere Molekulargewicht des ultrahochmolekularen Polyolefin 1 × 10⁶ bis 6 × 10⁶ beträgt;
(b) Herstellung einer zweiten Mischung durch Schmelzen und Mischen eines Polyolefinharzes, das ein gewichtsmittleres Molekulargewicht von unter 5×10⁵ aufweist, mit der ersten Mischung;
(c) Formen der zweiten Mischung zu einem Film;
(d) Entfernung des Lösungsmittels vom Film zur Ausbildung des mikroporösen Films; und
(e) Tempern des mikroporösen Films.

2. Verfahren nach Anspruch 1, wobei der Schritt des Formens durch Extrusion, Formen und Ziehen vollendet wird.

3. Verfahren nach Anspruch 1, wobei das Lösungsmittel flüssiges Paraffin ist.

4. Verfahren nach Anspruch 2, wobei das Ziehen ein ersten Ziehen entlang der Maschinenrichtung und anschließend ein zweites Ziehen entlang der Querrichtung aufweist.

5. Verfahren nach Anspruch 1, wobei die Schmelz- und Mischtemperatur der ersten Mischung 230°C bis 240°C beträgt.

6. Verfahren nach Anspruch 1, wobei das ultrahochmolekulare Polyolefin und das Lösungsmittel ein Gewichtsverhältnis von 1 : 1,9 bis 1 : 6,7 aufweisen.

## Revendications

1. Procédé de production d'un film microporeux, comprenant les étapes suivantes :
(a) préparer un premier mélange par fusion et mélange d'une polyoléfine de poids moléculaire très élevé à un solvant, le poids moléculaire moyen en poids de la polyoléfine de poids moléculaire très élevé étant de 1× 10⁶ à 6 × 10⁶ ;
(b) préparer un second mélange par fusion et mélange d'une résine de polyoléfine ayant un poids moléculaire moyen en poids inférieur à 5 × 10⁵ au premier mélange ;
(c) former le second mélange de manière à obtenir un film ;
(d) enlever le solvant du film pour former le film microporeux ; et
(e) recuire le film microporeux.

2. Procédé selon la revendication 1, dans lequel l'étape de formation est accomplie par extrusion, moulage et tirage.

3. Procédé selon la revendication 1, dans lequel le solvant est de la paraffine liquide.

4. Procédé selon la revendication 2, dans lequel le tirage comprend un premier tirage le long de la direction de machine et ensuite un second tirage le long de la direction transversale.

5. Procédé selon la revendication 1, dans lequel la température de fusion et de mélange du premier mélange est de 230°C à 240°C.

6. Procédé selon la revendication 1, dans lequel la polyoléfme de poids moléculaire très élevé et le solvant ont un rapport pondéral de 1 : 1,9 à 1 : 6,7.
